# FASCICULE DE BREVET EUROPEEN

(11) **EP 1 850 037 B1**
(45) Date de publication et mention de la délivrance du brevet: **24.02.2010**
(21) Numéro de dépôt: 07300910.2
(22) Date de dépôt: 30.03.2007
(51) Int. Cl.: F16H 61/26, F16H 63/30

(54) **Dispositif d'assistance au passage de vitesses sur boîte de vitesses manuelle**
Servoschaltung für Handschaltgetriebe mit Übertotpunktfeder
Spring assisted shift for manual transmission

(30) Priorité: 24.04.2006 FR 0651434
(43) Date de publication de la demande: 31.10.2007
(73) Titulaire: Renault, 92109 Boulogne Billancourt (FR)
(72) Inventeur: Franche, José, 92500, Rueil-Malmaison (FR); Teixeira, Jean-Michel, 92500, Rueil-Malmaison (FR)

(56) Documents cités:
- DE-A1- 2 521 139
- DE-B3- 10 358 510
- DE-C- 538 411
- FR-A- 697 771
- US-A- 1 540 247
- US-A- 2 019 073
- US-A- 4 502 346
- US-A- 4 515 029

## Description

La présente invention se rapporte aux boîtes de vitesses mécaniques à commande par tringle ou par câbles.

Plus précisément, elle a pour objet un dispositif d'assistance au passage des vitesses sur une boîte de vitesses mécanique, dont la chaîne de transmission d'effort de la commande de passage à partir du levier de vitesses du conducteur, comprend un câble, ou une tringle de commande externe, entraînant en rotation un axe de commande, en réponse aux déplacements du levier de changement de vitesses du conducteur.

Actuellement, on cherche à réduire l'effort de passage de vitesses, soit par une augmentation de la capacité de synchronisation et de la capacité de l'anneau de synchronisation à « dévirer », c'est-à-dire à s'effacer sous la poussée du baladeur, pour autoriser celui-ci à venir craboter le pignon fou, soit en augmentant la démultiplication de la commande de passage.

Toutefois, l'impact de ces mesures sur la qualité du passage reste minime. En effet, l'augmentation de la capacité des synchroniseurs est limitée, notamment par le nombre d'anneaux de synchronisation, qui n'est jamais supérieur à trois. Par ailleurs, la démultiplication de la commande de passage dépend des contraintes d'encombrement de la commande externe dans le véhicule, et de la course à la boule du levier dans l'habitacle.

Par la publication FR 2 693 808, on connaît un dispositif d'assistance mécanique au passage des vitesses, disposé entre le câble, ou la tringle de passage de vitesses, et un axe de passage s'étendant à l'intérieur de la boîte. Ce dispositif comprend deux pièces articulées, dont le débattement relatif est contrôlé élastiquement par un ressort disposé en série dans la chaîne de transmission d'effort de la commande, qui accumule de l'énergie en se comprimant pendant la phase de synchronisation, et libère l'énergie accumulée, à l'issue de celle-ci.

Un tel dispositif, qui impose au conducteur un effort supplémentaire pour comprimer le ressort en fin de course de passage, n'est donc pas un dispositif d'assistance au sens strict du terme. En effet le ressort, qui est disposé en série dans la chaîne de transmission, agit davantage comme un filtre que comme un organe d'assist ance, et introduit dans la commande un certain flou, qui est mal perçu par les utilisateurs.

La présente invention vise à réaliser un dispositif d'assistance mécanique, qui n'exige aucun effort supplément aire de poussée pour passer une vit esse.

Dans ce but, elle propose de disposer, en parallèle à la chaîne de transmission d'effort de la commande de passage, un ressort d'assistance qui libère de l'énergie par détente, dès qu'un axe de commande interne s'écarte de sa position de point mort, en direction d'une position de vitesse engagée.

Ce ressort travaille en compression, et il accumule de l'énergie en se comprimant pendant le retour du levier de commande en position de point mort.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1 est une vue d'ensemble du dispositif,
- les figures 2A et 2B illustrent le f onct ionnement de celui-ci, et
- les figures 3, 4A à 4C et 5A à 5C montrent des variantes de réalisation

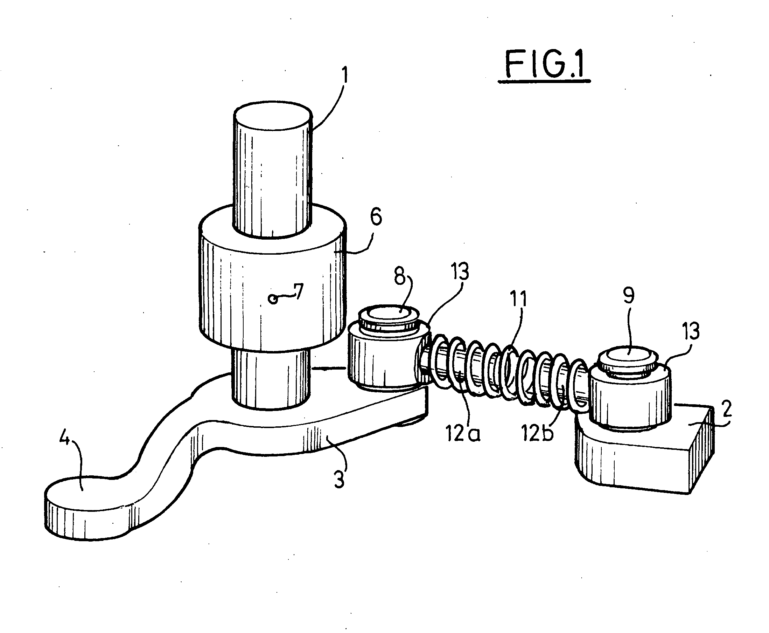

Sur la figure 1, on a fait apparaître en partie un axe de commande de passage de boîte de vitesse 1, disposé par exemple à l'intérieur d'une boîte de vitesses, dont on a représenté une partie, ou élément de carter 2. Sur l'axe de commande 1, est fixé un levier de passage 3, qui porte un doigt de passage 4, propre à déplacer un crabot d'axe de fourchette de passage, en réponse à un déplacement en rotation de l'axe 1. L'axe 1 appartient à la chaîne de transmission d'effort d'une commande de passage à partir du levier de vitesses du conducteur (non représentée), qui comprend par exemple un câble ou une tringle de commande externe par laquelle il est entraîné en rotation, en réponse aux déplacement du levier de changement de vitesses empoigné par le conducteur. L'axe 1 a un mouvement de rotation, ou liaison pivot, sur le carter 2.

Le levier de passage 3 comprend un fourreau 6 traversé par l'axe 1, et fixé sur ce lui-ci, par exemple par une goupille 7. A son extrémité opposée au doigt de passage, le levier porte un pivot 8. Le carter de la boîte 2, porte également un pivot 9, analogue au pivot 8 du levier.

Le dispositif proposé comprend un ressort d'assistance 11 préchargé, en appui contre les deux pivots 8, 9, qui agit en compression. Le ressort 11 est enroulé autour de deux tiges 12a 12b fixées sur des oeillets 13 engagés respectivement aux pivots 8 et 9, et maintenus sur ces derniers par des circlips 5. Les deux tiges 12a, 12b ne se rejoignent pas au milieu du ressort 11, de sorte que celui-ci exerce son effort de compression sur les deux pivots. Le ressort 11 dispose ainsi de deux points d'ancrage, respectivement sur une pièce mobile, telle que le pivot 8 levier de passage 3, et sur une pièce fixe, telle que le pivot 9 du carter 2.

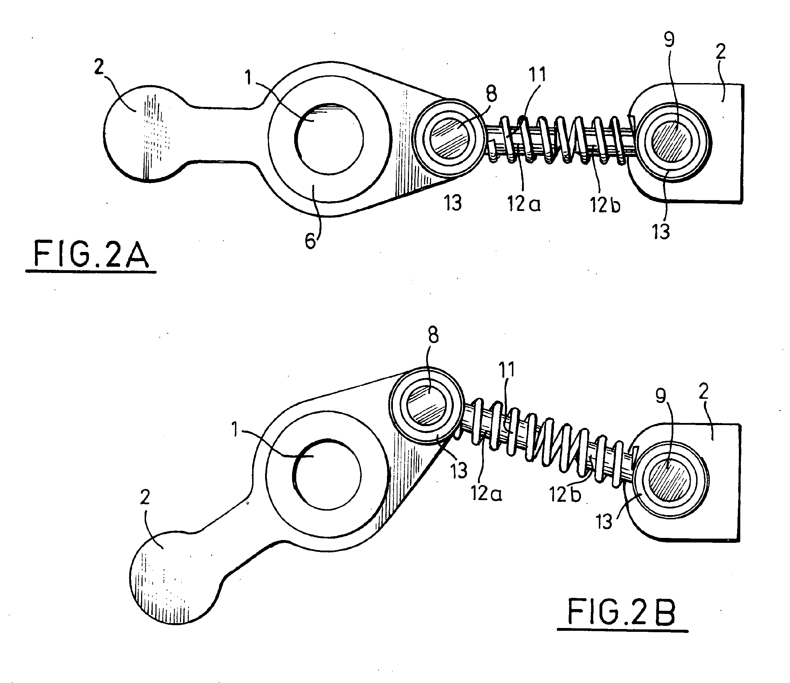

La figure 2A montre le dispositif au point mort. Dans cette situation, les deux tiges 12a, 12b sont alignées sur l'axe 1 et les deux pivot 8, 9. La figure 2B montre le même dispositif à l'écart du point mort, c'est-à-dire lorsqu'il a été déplacé de sa position de point mort par le câble ou la tringle de commande de passage.

Le fonctionnement du dispositif d'assistance est le suivant. Au point mort (figure 2A), l'effort du ressort est orienté en direction de l'axe 1, et il n'exerce aucun couple sur le levier 3. Dès que le levier est entraîné en rotation (figure 2B), le ressort 11 exerce un couple sur celui-ci et sur l'axe 1. Ce couple est un couple d'assistance au passage des vitesses, qui augmente avec l'angle de rotation du levier 3. Le ressort 11 est comprimé lors retour du levier 3, d'une position de vitesse engagée vers le point mort. Il emmagasine alors de l'énergie, qu'il libère lors de l'engagement de la vitesse suivante.

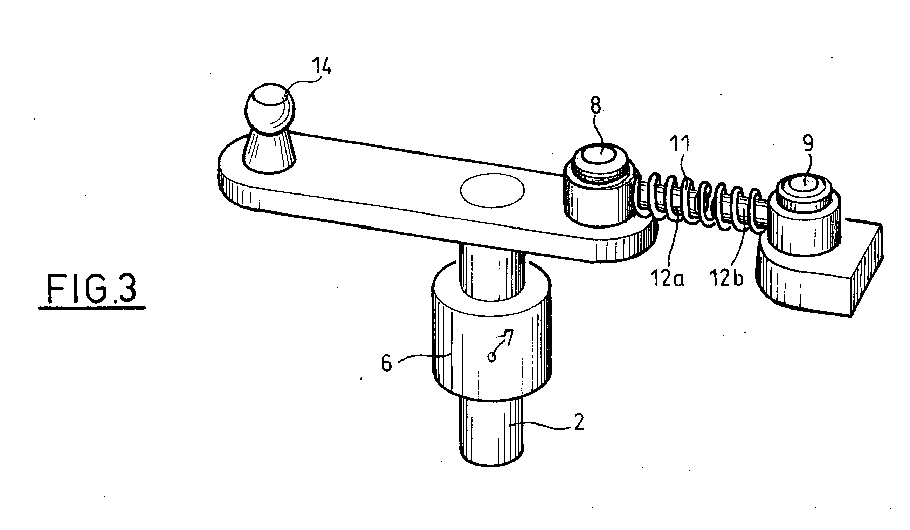

Dans la variante de la figure 3, le levier 3 ne porte pas de doigt de passage (qui peut être mont é en un autre point du même axe de passage). En revanche, il porte le point d'accrochage 14 du câble ou de la tringle de passage de vitesses. Le fonctionnement est le même, le couple d'assistance du ressort s'exerçant dès que le levier 3 est à l'écart de la position de point mort, dans laquelle l'axe 1, le pivot 8, et le point d'accrochage 14, sont alignés.

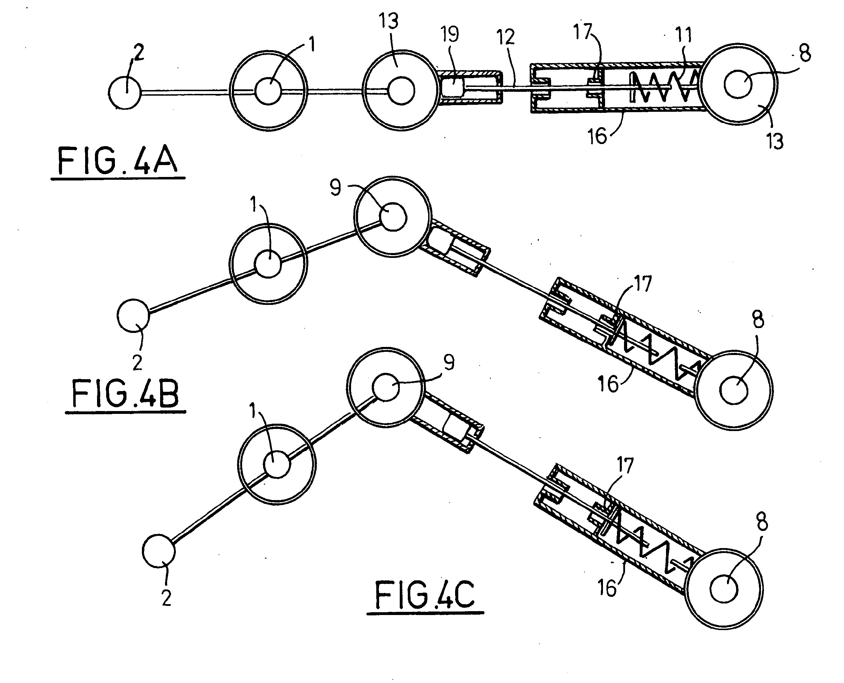

Sur les figures 4A à 4C, on a représenté schématiquement un chariot 16, portant un oeillet 13 engagé sur un pivot, tel que le pivot 8 ou le pivot 9 des exemples précédents. Le chariot 16 porte une butée 17, permettant de limiter la plage d'act ion du ressort, sans limiter la rotation du levier. Le fonctionnement du dispositif est le même que précédemment. Le ressort 11 est disposé à l'intérieur du chariot 16, et peut exercer sa poussée sur la tige 12 à partir du point mort (figure 4A), jusqu'à la butée 17 (figure 4B). La rotation du levier après la mise en butée de la tige (figure 4C) sera autorisée grâce au coulissement de celle-ci dans un manchon 19 tournant autour d'un pivot 8 ou 9.

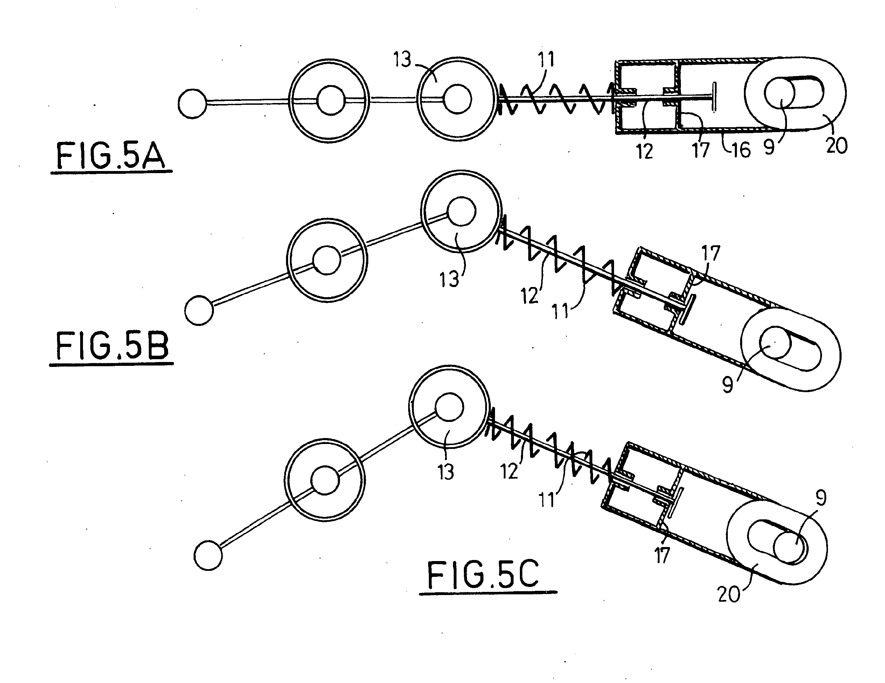

Dans la variante des figures 5A à 5C, le chariot 16 porte un oeillet oblong engagé sur un pivot, tel que le pivot 8 ou 9 des exemples précédents. Le chariot 16 porte une butée 17, permettant de limiter la plage d'action du ressort, sans limiter la rotation du levier. Le fonctionnement du disposit if est le même que précédemment. Cette fois, le ressort 11 est disposé à l'extérieur du chariot 16, et peut exercer sa poussée sur celui-ci, jusqu'à la butée 17. Après la mise en butée de la tige 12, la rotation du levier est autorisée, par exemple grâce au coulissement d'un oeillet oblong 20, le long du pivot 9.

Enfin, en variante, on peut aussi monter autour des tiges 12a, 12b, deux ressorts d'assistance au lieu d'un, pour limiter l'effort d'assistance du dispositif. Ces ressorts seront parallèles, et de longueur différente, de sorte que leurs efforts ne sont cumulés que sur une première partie du déplacement à l'écart du point mort.

Sans sortir du cadre de l'invention, le dispositif peut aussi bien être placé à l'intérieur qu'à l'extérieur de la boîte, ou encore dans l'habitacle du véhicule, en ancrant par exemple le ressort d'assistance, sur le levier de vitesses du conducteur.

En conclusion, l'invention propose un dispositif mécanique d'assistance propre à réduire les efforts de passage sur une boîte de vitesses manuelle, sans avoir à augmenter la démultiplication de commande interne ou externe, ou à changer la définition de la synchronisation.

L'invention apporte également un gain sur le confort de passage en réduisant le « croquement » désagréablement ressenti par le conducteur, grâce à une accélération du baladeur, notamment lors de la phase de vol libre. Elle procure donc une sensation de fluidité lors des passages de vitesses, qui est très appréciable.

## Revendications

1. Dispositif d'assistance mécanique au passage des vitesses sur une boîte de vitesses mécanique dont la chaîne de transmission d'effort de la commande de passage à partir du levier de vitesses du conducteur comprend un câble ou une tringle de commande externe entraînant en rotation un axe de commande (1) de passage en réponse aux déplacement du levier de changement de vitesses du conducteur, comprenant un ressort d'assistance (11) qui est disposé en parallèle à la chaîne de transmission d'effort de la commande de passage de manière à libérer de l'énergie par détente dès que l'axe (1) s'écarte de sa position de point mort en direction d'une position de vitesse engagée, **caractérisé en ce que** le ressort (11) est ancré sur un levier de passage (3) qui est fixé sur l'axe (1), et qui porte un doigt de passage de vitesses (2).

2. Dispositif d'assistance selon la revendication 1, **caractérisé en ce que** le ressort (11) est préchargé.

3. Dispositif d'assistance selon la revendication 1 ou 2, **caractérisé en ce que** le ressort (11) travaille en compression.

4. Dispositif d'assistance selon la revendication 1, 2 ou 3, **caractérisé en ce que** le ressort (11) accumule de l'énergie en se comprimant pendant le retour de l'axe (1) en position de point mort.

5. Dispositif d'assistance selon l'une des revendications précédentes, **caractérisé en ce que** le ressort dispose d'un premier point d'ancrage (8) sur l'axe (1), et d'un deuxième point d'ancrage (9) une pièce fixe (2).

6. Dispositif d'assistance selon la revendication 5, **caractérisé en ce que** la pièce fixe (2) est un élément du carter de la boîte.

7. Dispositif d'assistance selon la revendication 6 **caractérisé en ce qu'**il comporte un chariot (16), permettant de limiter la plage d'action du ressort (11) sans limiter la rotation du levier (3).

8. Dispositif d'assistance selon la revendication 7, **caractérisé en ce que** le ressort (11) est disposé à l'intérieur du chariot (16).

9. Dispositif d'assistance selon la revendication 7, **caractérisé en ce que** le ressort (11) est disposé à l'extérieur du chariot (16).

## Claims

1. Device for mechanically assisting the gear shift on a mechanical gearbox in which the force transmission chain of the shift control from the driver's gear lever comprises an external control cable or rod rotating a shift control pin (1) in response to the movement of the driver's gear change lever, comprising an assistance spring (11) which is arranged in parallel to the force transmission chain of the shift control so as to release energy by expansion as soon as the pin (1) moves away from its neutral position in the direction of an engaged gear position, **characterized in that** the spring (11) is anchored on a shift lever (3) which is fastened to the pin (1), and which bears a gear shift finger (2).

2. Assistance device according to Claim 1, **characterized in that** the spring (11) is preloaded.

3. Assistance device according to Claim 1 or 2, **characterized in that** the spring (11) works in compression.

4. Assistance device according to Claim 1, 2 or 3, **characterized in that** the spring (11) accumulates energy by compressing during the return of the pin (1) to the neutral position.

5. Assistance device according to one of the preceding claims, **characterized in that** the spring has a first anchoring point (8) on the pin (1) and a second anchoring point (9) on a fixed component (2).

6. Assistance device according to Claim 5, **characterized in that** the fixed component (2) is an element of the gearbox housing.

7. Assistance device according to Claim 6, **characterized in that** it comprises a carriage (16) for limiting the range of action of the spring (11) without limiting the rotation of the lever (3).

8. Assistance device according to Claim 7, **characterized in that** the spring (11) is arranged inside the carriage (16).

9. Assistance device according to Claim 7, **characterized in that** the spring (11) is arranged outside the carriage (16).

## Patentansprüche

1. Mechanische Gangwechsel-Unterstützungsvorrichtung in einem mechanischen Schaltgetriebe, dessen Kraftübertragungskette für die Wechselsteuerung ausgehend vom Schalthebel des Fahrers ein Seil oder ein Gestänge zur externen Steuerung enthält, das in Reaktion auf die Verlagerung des Gangschalthebels des Fahrers eine Wechselsteuerwelle (1) rotatorisch antreibt, wobei eine Unterstützungsfeder (11) vorgesehen ist, die parallel zur Kraftübertragungskette der Wechselsteuerung angeordnet ist, derart, dass durch Entspannung Energie freigesetzt wird, sobald sich die Welle (1) aus ihrer Totpunktposition in Richtung einer Position mit eingelegtem Gang entfernt, **dadurch gekennzeichnet, dass** die Feder (11) an einem Wechselhebel (3) verankert ist, der an der Welle (1) befestigt ist und der einen Gangwechselzapfen (2) trägt.

2. Unterstützungsvorrichtung nach Anspruch 1, **dadurch gekennzeichnet, das** die Feder (11) vorbelastet ist.

3. Unterstützungsvorrichtung nach Anspruch 1 oder 2, **dadurch gekennzeichnet, das** die Feder (11) als Druckfeder arbeitet.

4. Unterstützungsvorrichtung nach Anspruch 1, 2 oder 3, **dadurch gekennzeichnet, dass** die Feder (11) Energie akkumuliert, indem sie bei der Rückkehr der Welle (1) in die Totpunktposition komprimiert wird.

5. Unterstützungsvorrichtung nach einem der vorhergehenden Ansprüche, **dadurch gekennzeichnet, dass** die Feder über einen ersten Verankerungspunkt (8) auf der Welle (1) und über einen zweiten Verankerungspunkt (9) an einem festen Teil (2) verfügt.

6. Unterstützungsvorrichtung nach Anspruch 5, **dadurch gekennzeichnet, dass** das feste Teil (2) ein Element des Getriebegehäuses ist.

7. Unterstützungsvorrichtung Anspruch 6, **dadurch gekennzeichnet, dass** sie einen Schlitten (16) enthält, der ermöglicht, den Wirkungsbereich der Feder (11) zu begrenzen, ohne die Drehung des Hebels (3) zu begrenzen.

8. Unterstützungsvorrichtung nach Anspruch 7, **dadurch gekennzeichnet, dass** die Feder (11) innerhalb des Schlittens (16) angeordnet ist.

9. Unterstützungsvorrichtung nach Anspruch 7, **dadurch gekennzeichnet, dass** die Feder (11) außerhalb des Schlittens (16) angeordnet ist.
